# EUROPÄISCHE PATENTSCHRIFT

(11) **EP 0 737 130 B1**
(45) Veröffentlichungstag und Bekanntmachung des Hinweises auf die Patenterteilung: **10.09.1997**
(21) Anmeldenummer: 95927693.2
(22) Anmeldetag: 20.07.1995
(51) Int. Cl.: B29C 67/00

(54) **VERFAHREN UND VORRICHTUNG ZUM HERSTELLEN EINES DREIDIMENSIONALEN OBJEKTES**
PROCESS AND DEVICE FOR PRODUCING A THREE-DIMENSIONAL OBJECT
PROCEDE ET DISPOSITIF POUR LA PRODUCTION D'UN OBJET A TROIS DIMENSIONS

(30) Priorität: 02.11.1994 DE 4439124
(43) Veröffentlichungstag der Anmeldung: 16.10.1996
(73) Patentinhaber: EOS GmbH ELECTRO OPTICAL SYSTEMS, 82152 Planegg (DE)
(72) Erfinder: LANGER, Hans, J., D-82166 Gräfelfing (DE); WILKENING, Christian, D-86911 Diessen (DE)
(74) Vertreter: Prüfer, Lutz H., Dipl.-Phys.
(86) Internationale Anmeldenummer: EP9502887
(87) Internationale Veröffentlichungsnummer: WO9614203

(56) Entgegenhaltungen:
- EP-A- 0 529 816
- DE-C- 4 300 478
- US-A- 5 135 379
- US-A- 5 139 711
- PATENT ABSTRACTS OF JAPAN vol. 14 no. 164 (M-0957) ,30.März 1990 & JP,A,02 024127 (MITSUI ENG & SHIPBUID CO LTD) 26.Januar 1990,

## Beschreibung

Die Erfindung betrifft ein Verfahren zum Herstellen eines dreidimensionalen Objektes nach dem Oberbegriff des Patentanspruches 1 bzw. 21 und eine Vorrichtung zur Durchführung eines derartigen Verfahrens nach dein Oberbegriff des Anspruches 17 bzw. 25.

Ein derartiges Verfahren bzw. eine Vorrichtung sind aus der DE 43 00 478 C1 bekannt. Wie aus Fig. 1 ersichtlich ist, weist die bekannte Vorrichtung einen im wesentlichen horizontal angeordneten Arbeitstisch 1 mit einem Loch in Form eines Ausschnittes 2 auf. Der Ausschnitt 2 ist größer als die größte Querschnittsfläche eines herzustellenden Objektes 3. Oberhalb des Arbeitstisches 1 ist eine Bestrahlungseinrichtung 4 in Gestalt eines Lasers angeordnet, die einen gerichteten Lichtstrahl 5 abgibt. Dieser wird über eine Ablenkeinrichtung 6 als abgelenkter Strahl 7 auf die Ebene des Arbeitstisches 1 abgelenkt. Eine Steuerung 8 steuert die Ablenkeinrichtung derart, daß der abgelenkte Strahl 7 auf jede gewünschte Stelle innerhalb des vom Ausschnitt 2 definierten Arbeitsbereiches auftrifft.

Unterhalb des Ausschnittes 2 ist eine ebenfalls im wesentlichen horizontal angeordnete Unterlage 9 in Form einer Plattform vorgesehen, die mittels einer Höheneinstellvorrichtung 10 in Richtung des Pfeiles 11 zwischen einer höchsten Stellung, in der die Oberfläche der Unterlage 9 innerhalb des Ausschnittes 2 und im wesentlichen in derselben Höhe wie die Oberfläche des Arbeitstisches 1 liegt, und einer tiefsten Stellung, in der der Abstand zwischen der Unterlage und dem Arbeitstisch größer als die maximale Höhe des Objektes 3 ist, verschiebbar ist.

Eine Vorrichtung 12 zum Aufbringen einer gleichmäßigen Schicht eines pulverförmigen durch Einwirkung elektromagnetischer Strahlung verfestigbaren Materiales 13, die beispielsweise als Vorratsbehälter mit Wischer zum Glätten der Schicht ausgebildet ist, ist horizontal über den Arbeitstisch 1 über den Ausschnitt 2 bewegbar.

Die Steuerung 8 und die Höheneinstellvorrichtung 10 sind jeweils mit einer zentralen Steuereinheit 14 zur koordinierten Steuerung dieser Vorrichtungen verbunden.

Bei dem unter dem Namen Lasersintern bekannten Verfahren wird in einem ersten Schritt die Unterlage 9 mittels der Höheneinstellvorrichtung 10 in die höchste Stellung gefahren, in der die Oberfläche der Unterlage 9 in einer Ebene mit der Oberfläche des Arbeitstisches 1 liegt und anschließend um den Betrag der vorgesehen Dicke der ersten Materialschicht abgesenkt, so daß innerhalb des Ausschnittes 2 ein abgesenkter Bereich gebildet ist, der seitlich von den Wänden des Ausschnittes 2 und unten von der Oberfläche der Unterlage 9 begrenzt ist. Dann wird eine erste Schicht des Materiales 13 mittels der Vorrichtung 12 mit der vorgesehenen Schichtdicke in dem vorn Ausschnitt 2 und der Unterlage 9 gebildeten Hohlraum aufgebracht und geglättet. Daraufhin steuert die Steuereinheit 14 die Ablenkeinrichtung 6 über deren Steuerung derart, daß der abgelenkte Lichtstrahl 7 an solchen Stellen der Schicht auftrifft, die entsprechend von in der Steuereinheit 14 gespeicherten Koordinaten des Objektes 3 verfestigt werden sollen und dort das Material sintert. Anschließend wird die Steuereinheit 14 derart gesteuert, daß der abgelenkte Lichtstrahl nur auf den an die Innenfläche des Ausschnittes 2 angrenzenden Bereich der Materialschicht auftrifft und dort die Materialschicht durch Sintern verfestigt, wodurch eine erste ringförmige Wandschicht entsteht, die das verbleibende pulverförmige Material der Schicht vollständig umgibt.

In weiteren Schritten wird jeweils die Unterlage 9 um den Betrag der Schichtdicke der nächsten Schicht abgesenkt, und dann wie im ersten Schritt verfahren. Dadurch, daß bei der Herstellung jeder Objektschicht eine ringförmige Wandschicht auf die darunterliegende ringförmige Wandschicht aufgesintert wird, entsteht ein ringförmiger Wandbereich 15 in Form einer Behälterwand, der das Objekt 3 zusammen mit dem verbleibenden nicht gesinterten Material 13 umschließt und so beim Absenken der Unterlage 9 unter den Arbeitstisch 1 ein Austreten des Materiales 13 verhindert. Die Schritte werden so oft wiederholt, bis das Objekt 3 fertiggestellt ist.

Die mitverfestigte Behälterwand 15 hält unverfestigtes Pulver 13 an seinem Platz. Somit wirkt das unverfestigte Pulver als Stütze für darüberliegende Schichten. Werden zusätzlich zu der zylinderförmigen Behälterwand 15 noch ein Boden und ein Deckel mitverfestigt, so können lange Abkühlzeiten für das gebildete Objekt in der Lasersinteranlage vermieden werden, da das Objekt komplett mit seinein Behälter aus der Anlage entfernt werden kann und zum Abkühlen an einen separaten Ort gebracht werden kann.

Das bekannte Verfahren weist jedoch die folgenden Nachteile auf. Die Behälterwand 15 stellt ein separates Bauteil dar, welches Schicht für Schicht bestrahlt werden muß. Dadurch wird die Bauzeit unnötig lang. Normalerweise verschlechtert sich die Fokussierung des Laserstrahles am Rand, also in dem Bereich, in dem die Behälterwand verfestigt werden soll. Somit ist der sichere Bau einer stabilen Behälterwand schwierig.

Ein weiterer Nachteil besteht darin, daß die mit dem Laser erzeugte Behälterwand beim Verfestigen jeder Schicht des Objektes mitverfestigt wird, so daß sie für den Wischer 12, der mit einem gewissen Druck über die Oberfläche der Schicht streicht ein Hindernis darstellt, wobei sie bei jedem Neubeschichtungsvorgang beschädigt werden kann.

Ferner kann das bekannte Verfahren nicht bei Verwendung von Formsand als zu verfestigendes Material durchgeführt werden, da bei Bestrahlung mit dein Laserstrahl keine dünne aber dennoch ausreichend stabile Behälterwand erzeugt werden kann.

Es ist Aufgabe der Erfindung, ein Verfahren und eine Vorrichtung zum Herstellen eines dreidimensionalen Objektes bereit zu stellen, bei dem bzw. mit der zusammen mit dem Bauteil eine stabile Behälterwand in kurzer Zeit erzeugt werden kann.

Die Aufgabe wird gelöst durch das Verfahren nach Patentanspruch 1 oder 21 bzw. durch eine Vorrichtung nach Patentanspruch 17 oder 25.

Weiterbildungen sind in den Unteransprüchen gegeben.

Das Verfahren hat den Vorteil, daß eine Bestrahlungszeit für die Behälterwand bzw. den Rahmen entfällt. Das führt zu einer hohen Zeitersparnis. Insbesondere ist das Verfahren für die Verwendung von Formsand als zu verfestigendes Material geeignet.

Weitere Merkmale und Zweckmäßigkeiten ergeben sich aus der Beschreibung von Ausführungsbeispielen anhand der Figuren.

Von den Figuren zeigen:
- Fig. 1: eine schematische Querschnittansicht einer bekannten Vorrichtung zum Herstellen eines dreidimensionalen Objektes mittels Lasersinterns; und
- Fig. 2: eine schematische Querschnittansicht einer Ausführungsform der erfindungsgemäßen Vorrichtung zur Durchführung des Verfahrens.

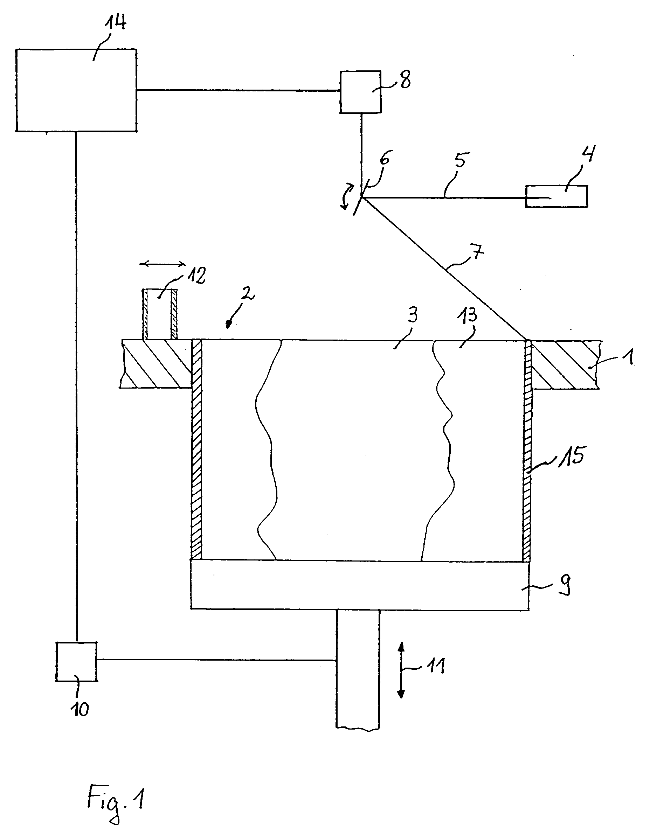

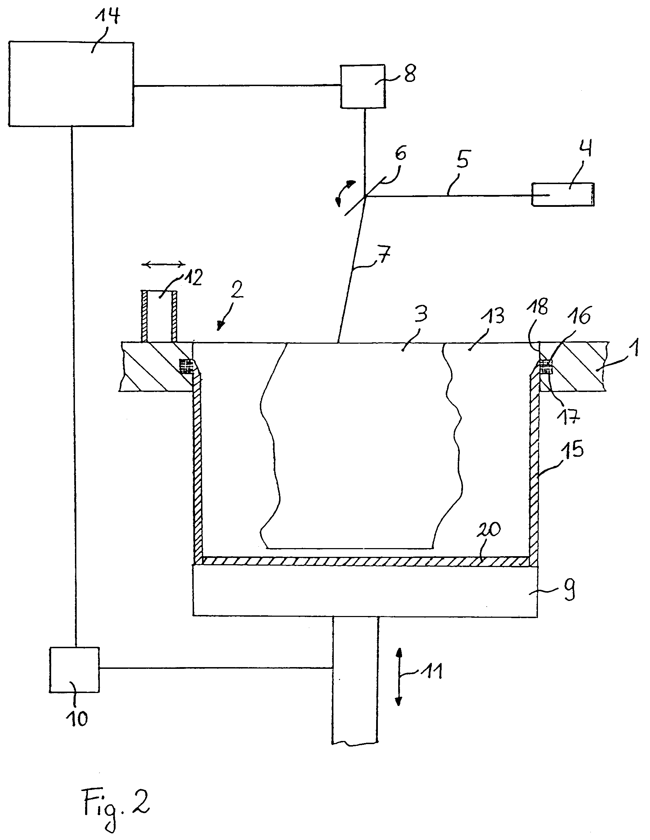

Wie aus Fig. 2 ersichtlich ist, weist eine Vorrichtung zur Durchführung des Verfahrens dieselben Komponenten wie die in Fig. 1 dargestellte Vorrichtung auf. Daher wird die Beschreibung von Komponenten mit gleichen Bezugszeichen hier nicht wiederholt.

Zusätzlich weist die Vorrichtung einen Heizring 16 beispielsweise in Form einer Heizspirale auf, welcher in einer Ausnehmung 17 in einer den Ausschnitt 2 begrenzenden Wand 18 des Arbeitstisches 1 angeordnet ist. Dabei ist die Heizspirale 16 so in die Ausnehmung 17 eingepaßt, daß sie formschlüssig mit der Wand 18 abschließt. Die Ausnehmung 17 an dem Arbeitstisch 1 befindet sich nicht direkt an der Arbeitsoberfläche, die durch den Auftreffpunkt des Laserstrahles 7 auf die Oberfläche des Materiales 13 definiert ist, sondern einige Zentimeter unterhalb der Arbeitsoberfläche. Die Unterlage 9 ist bei der Vorrichtung beheizbar, so daß jeweils die ersten auf die Unterlage 9 aufgebrachten Schichten des Materiales 13 durch Wärmeeinwirkung verfestigt werden können.

Bei dem Verfahren wird zunächst wie bei dem bekannten Verfahren die Unterlage 9 mittels der Höheneinstellvorrichtung 10 in die höchste Stellung gefahren, in der die Oberfläche der Unterlage 9 in einer Ebene mit der Oberfläche des Arbeitstisches 1 liegt, und anschließend um den Betrag der vorgesehenen Dicke der ersten Materialschicht abgesenkt, so daß innerhalb des Ausschnittes 2 ein abgesenkter Bereich gebildet ist, der seitlich von der Wandung 18 des Ausschnittes 2 und unten von der Oberfläche der Unterlage 9 begrenzt ist. Mittels der Aufbringvorrichtung 12 wird sodann eine erste Schicht von pulverförmigem, sinterbarem Material 13, beispielsweise Formsand, welcher aus Quarzsand mit Phenolharzüberzug besteht, mit der vorgesehenen Schichtdicke in den vom Ausschnitt 2 und der Unterlage 9 gebildeten abgesenkten Bereich eingebracht.

Dann wird, abweichend vom Stand der Technik die Unterlage 9 so beheizt, daß die so aufgebrachte erste Schicht durch Wärmeeinwirkung sintert und somit verfestigt wird. Auf diese Weise wird zunächst eine feste Bodenschicht 20 gebildet. Die erforderliche Temperatur zur Verfestigung beträgt je nach Material zwischen 80 °C und 160 °C.

In einem zweiten Schritt wird die Unterlage 9 mittels der Höheneinstellvorrichtung 10 von der Steuereinheit 14 um den Betrag mindestens einer Schichtdicke abgesenkt und mittels der Aufbringvorrichtung 12 in den damit entstehenden abgesenkten Bereich innerhalb des Ausschnittes 2 eine Menge des Formsandes 13 entsprechend mindestens einer Schichtdicke eingebracht und geglättet. Somit befindet sich über der verfestigten Bodenschicht 20 mindestens eine Schicht unverfestigten Materials 13.

Nach Absenken der Unterlage um den Betrag der Schichtdicke der nächsten Schicht, Aufbringen und Glätten des Materiales 13 kann nun die Herstellung des Objektes 3 selbst beginnen. Hierzu steuert die Steuereinheit 14 die Ablenkeinrichtung 6 derart, daß der abgelenkte Lichtstrahl 7 an solchen Stellen der Schicht auftrifft, die entsprechend den in der Steuereinheit 14 gespeicherten Koordinaten des Objektes 3 verfestigt werden sollen.

Sobald dabei durch Absenken der Unterlage 9 das das Objekt 3 umgebende, unverfestigte Material 13 in den Bereich der Heizspirale 16 gelangt, wird ein das Objekt 3 und das noch unverfestigte Material 13 umgebender ringförmiger Bereich des Materiales 13 durch Wärmeeinwirkung über Wärmeleitung gesintert. Der ringförmige Bereich weist dabei eine vertikale Ausdehnung von mehreren Schichtdicken auf, entsprechend der vertikalen Ausdehnung der Ausnehmung 17 bzw der Heizspirale 16. Da die Unterlage 9 vor dein Verfestigen einer neuen Schicht des Objektes 3 jeweils um eine Schichtdicke, die beispielsweise in den Bereich von wenigen Zehntelmillimetern liegt, abgesenkt wird, befinden sich jeweils mehrere Schichten für einen längeren Zeitraum im Einflußbereich der Wärmeeinwirkung der Heizspirale 16. Somit wird der Behälterrand 15 kontinuierlich aus übereinanderliegenden ringförmigen Bereichen des an die Wand 18 des Ausschnittes 2 angrenzenden Materials 13 verfestigt. Die Zeit, in der sich der Formsand im Wirkungsbereich der Heizspirale 16 aufhält, beträgt je nach Baugeschwindigkeit zwischen 20 Minuten und einer Stunde. Die Heizspirale hat davon abhängig eine Temperatur von 80 °C bis 160 °C. Je schneller der Bauprozeß stattfindet, d. h. je kürzer sich das Material 13 im Heizbereich befindet, desto höher muß die Temperatur gewählt werden.

Formsand ist als Material besonders geeignet, da bei diesem keine Verklebung zwischen dein Formsand und der Heizspirale stattfindet.

Die so gebildete Behälterwand verhindert beim Absenken der Unterlage 9 unter den Arbeitstisch 1 ein Austreten des Materiales 13. Dadurch, daß die Behälterwand 15 sich nicht bis zur Arbeitsoberfläche erstreckt, wie es bei der herkömmlichen Verfestigung der Behälterwand mittels Lasereinwirkung der Fall ist, stellt die Behälterwand kein Hindernis für den Wischer der Aufbringvorrichtung 12 bei einem Neubeschichtungsvorgang dar. Da die Wärmeeinwirkung auf den zu verfestigenden Randbereich getrennt von der Bestrahlung der Schichten erfolgt, kann die beim bekannten Verfahren notwendige Bestrahlungszeit eingespart werden. Die Zeitersparnis beträgt etwa 20 s pro Schicht.

Nach Fertigstellung der letzten Objektschicht wird die Behälterwand 15 mit den oben beschriebenen Schritten weiter verfestigt, so daß sie das Objekt 3 um einige Schichtdicken überragt und anschließend wird mittels Bestrahlung mit dem Laser 4 eine Deckelschicht 21 verfestigt, die zusammen mit der Bodenschicht 20 und der Behälterwand 15 einen das Objekt 3 und das verbleibende ungesinterte Material 13 dicht einschließenden Behälter bildet.

Der Behälter mit dem darin enthaltenen Objekt 3 kann sodann von der Unterlage 9 abgenommen werden und zum Abkühlen an einen separaten Ort gebracht werden, so daß sofort wieder mit der Herstellung eines neuen Objektes begonnen werden kann.

Modifikationen sind möglich. So kann die Herstellung der Bodenschicht 20 und/oder der Deckelschicht 21 entfallen. Dies ist insbesondere dann geeignet, wenn das Objekt in der Anlage abkühlen soll und eine sichere Abkühlung - auch des dann freiliegenden Restpulvers - im Behälter 15 möglich ist. Alternativ kann die Bodenschicht 20 auch durch Bestrahlung mit dem Laser verfestigt werden. Die Aufbringvorrichtung 12 kann auch als Walze, als Schieber oder als Besen oder in jeder zum Aufbringen einer gleichmäßigen Schicht aus pulverförmigem Material geeigneten Weise ausgebildet sein. Der Querschnitt des Ausschnittes 2 muß nicht notwendigerweise kreisförmig sein, er kann auch quadratisch oder rechteckig sein oder jede beliebige Form aufweisen. Anstelle der Verwendung einer Heizspirale ist es auch möglich den Arbeitstisch über die gesamte Dicke zu beheizen oder eine Wärmelampe zu verwenden. Ferner kann die Verfestigung einer Deckelschicht auch durch Wärmeeinwirkung über das Auflegen eines beheizbaren Deckels auf die Behälterwand oder durch Bestrahlung der obersten unverfestigten Schicht mit einer Wärmelampe erfolgen.

Das Verfahren ist nicht nur bei Verwendung von Formsand durchführbar, sondern es kann auch kunststoffummanteltes Keramik- oder Metallpulver verwendet werden. Es ist auch möglich, als zu verfestigendes Material ein lichtaushärtbares Polymer zu verwenden. Ferner kann als Bestrahlungseinrichtung jede andere Strahlungsquelle für elektromagnetische Strahlung, die einen gerichteten Lichtstrahl mit zum Sintern ausreichender Energie abgibt, wie beispielsweise eine UV-Lampe, verwendet werden. Auch die Bestrahlung mittels Elektronenstrahlen aus einer Elektronenstrahlquelle ist denkbar.

In einem weiteren Ausführungsbeispiel erfolgt die Verfestigung der Behälterwand 15 mittels eines Flüssigklebers, der dem zu verfestigenden Material in dem an den Arbeitstisch angrenzenden Randbereich zugeführt wird und dort dessen Verklebung bewirkt. Der Flüssigkleber wird dem Material 13 über ein in die Ausnehmung 17 eingepaßtes Rohr, welches eine Mehrzahl von Ausströmdüsen aufweist, zugeführt. Bei der Verwendung von Formsand als zu verfestigendes Material wird ein Kleber mit einer Abbindezeit von ungefähr 20 Minuten bis zu einer Stunde verwendet, je nach Bauzeit des Objektes. Der Kleber muß so ausgewählt sein daß er sich nicht mit dem Rohr, welches üblicherweise aus Metall gefertigt ist, verbindet. Alternativ zur Zufuhr des Flüssigklebers kann auch dem Material 13 vor der Verfestigung eine Bindersubstanz eines Klebers zugefügt werden, welche mit einer über das Rohr zugeführten Härtersubstanz reagiert und somit das Material verfestigt.

## Patentansprüche

1. Verfahren zum Herstellen eines dreidimensionalen Objektes, bei dein das Objekt (3) schichtweise dadurch erzeugt wird, daß jeweils eine Schicht aus mittels elektromagnetischer Strahlung oder Teilchenstrahlung verfestigbaren Materiales (13) aufgetragen und anschließend an den dem Objekt (3) entsprechenden Stellen durch Bestrahlen verfestigt wird, wobei zur Erzeugung einer Behälterwand (15) für das Material (13) ein das Objekt (3) umschließender Bereich des Materiales (13) mitverfestigt wird,
dadurch gekennzeichnet, daß
die Verfestigung des Bereiches durch Wärmeeinwirkung über Wärmeleitung erfolgt.

2. Verfahren nach Anspruch 1, dadurch gekennzeichnet, daß
als Material (13) ein pulverförmiges Feststoffmaterial verwendet wird.

3. Verfahren nach Anspruch 2, dadurch gekennzeichnet, daß
als Material (13) Formsand verwendet wird.

4. Verfahren nach Anspruch 3, dadurch gekennzeichnet, daß
der Formsand Quarzsand mit einem Überzug aus Phenolharz umfaßt.

5. Verfahren nach Anspruch 1 oder 2, dadurch gekennzeichnet, daß
als Material (13) ein kunststoffummanteltes Metall- oder Kermamikpulver verwendet wird.

6. Verfahren nach einem der Ansprüche 1 bis 5, dadurch gekennzeichnet, daß
in einen Ausschnitt (2) eines Arbeitstisches (1) eine Materialschicht definierter Dicke eingebracht wird und daß die Behälterwand (15) durch Erwärmen des an die Innenwand des Ausschnittes (2) angrenzenden Materialbereiches erzeugt wird, so daß die Materialschicht von der Behälterwand (15) umschlossen wird.

7. Verfahren nach Anspruch 6, dadurch gekennzeichnet, daß
die Materialschicht auf eine Unterlage (9) aufgebracht wird, die in ihrer höchsten Stellung zumindest teilweise innerhalb des Ausschnittes (2) angeordnet ist und zur Bildung jeder Schicht des Objekts (3) um einen der Dicke dieser Schicht entsprechenden Betrag nach unten abgesenkt wird.

8. Verfahren nach Anspruch 6 oder 7, dadurch gekennzeichnet, daß
bei der Verfestigung einer Schicht des Objektes (3) jeweils ein mindestens eine darunterliegende Schicht umschließender ringförmiger Bereich unter Wärmeeinwirkung verfestigt wird.

9. Verfahren nach Anspruch 8, dadurch gekennzeichnet, daß
beim Verfestigen der Schichten des Objektes (3) die ringförmigen Bereiche kontinuierlich aufeinanderfolgend zum Erzeugen der das gesamte Objekt (3) umschließenden Behälterwand (15) verfestigt werden.

10. Verfahren nach einem der Ansprüche 6 bis 9, dadurch gekennzeichnet, daß
vor der Erzeugung der Behälterwand (15) und des Objektes (3) eine Materialschicht über die ganze vom Bereich der Behälterwand (15) umschlossene Fläche verfestigt wird, so daß ein Boden (20) für den Behälter erzeugt wird.

11. Verfahren nach Anspruch 10, dadurch gekennzeichnet, daß
die Fläche durch Beheizen der Unterlage (9) verfestigt wird.

12. Verfahren nach Anspruch 10, dadurch gekennzeichnet, daß
die Fläche durch Bestrahlen verfestigt wird.

13. Verfahren nach einem der Ansprüche 6 bis 12, dadurch gekennzeichnet, daß
nach Erzeugung der Behälterwand (15) und des Objektes (3) eine Materialschicht über die ganze vom Bereich der Behälterwand (15) umschlossene Fläche verfestigt wird, so daß ein Deckel (21) für den Behälter erzeugt wird.

14. Verfahren nach Anspruch 13, dadurch gekennzeichnet, daß
die Fläche durch Wärmeeinwirkung über Wärmeleitung verfestigt wird.

15. Verfahren nach Anspruch 13, dadurch gekennzeichnet, daß
die Fläche durch Bestrahlung verfestigt wird.

16. Verfahren nach einem der Ansprüche 6 bis 15, dadurch gekennzeichnet, daß
zur Verfestigung der Behälterwand (15) eine in dem Ausschnitt (2) des Arbeitstisches (1) vorgesehene Heizspirale verwendet wird.

17. Vorrichtung zur Durchführung des Verfahrens nach Anspruch 1 mit
einer höheneinstellbaren Unterlage (9), einer Vorrichtung (12) zum Aufbringen einer Schicht des verfestigbaren Materiales (13) auf die Unterlage (9), einer Bestrahlungseinrichtung (4) und einer Steuerung (8) für die Bestrahlungseinrichtung (4) zum Bestrahlen von den dem Objekt (3) entsprechenden Stellen der Schicht, gekennzeichnet durch
eine Heizeinrichtung (16) zum Verfestigen des das Objekt (3) umschließenden Bereiches des Materials (13) durch Wärmeeinwirkung über Wärmeleitung.

18. Vorrichtung nach Anspruch 17, dadurch gekennzeichnet, daß
ein Arbeitstisch (1) mit einem den umschließenden Bereich (15) entsprechenden Ausschnitt (2) vorgesehen ist, und daß die Unterlage (9) in eine Position anhebbar ist, in der ihre Oberfläche innerhalb des Ausschnittes (2) im wesentlichen in einer Ebene mit der Oberfläche des Arbeitstisches (1) liegt.

19. Vorrichtung nach Anspruch 18, dadurch gekennzeichnet, daß
die Heizeinrichtung (16) eine Heizspirale umfaßt, die in einer den Ausschnitt (2) umgebenden Ausnehmung (17) des Arbeitstisches (1) vorgesehen ist, so daß sie den das Objekt umschließenden Bereich des Materiales einschließt.

20. Vorrichtung nach einem der Ansprüche 17 bis 19, dadurch gekennzeichnet, daß
die Bestrahlungseinrichtung (4) einen Laser umfaßt.

21. Verfahren zum Herstellen eines dreidimensionalen Objektes, bei dem das Objekt (3) schichtweise dadurch erzeugt wird, daß jeweils eine Schicht aus mittels elektromagnetischer Strahlung oder Teilchenstrahlung verfestigbaren Materiales (13) aufgetragen und anschließend an den dem Objekt (3) entsprechenden Stellen durch Bestrahlen verfestigt wird, wobei zur Erzeugung einer Behälterwand (15) für das Material ein das Objekt umschließender Bereich des Materiales mitverfestigt wird,
dadurch gekennzeichnet, daß
die Verfestigung des Bereiches durch Zufuhr einer verfestigenden Substanz in den Bereich erfolgt.

22. Verfahren nach Anspruch 21, dadurch gekennzeichnet, daß
die Substanz einen Flüssigkleber umfaßt.

23. Verfahren nach Anspruch 21 oder 22, dadurch gekennzeichnet, daß
dem zu verfestigenden Material (13) vor der Verfestigung des Objektes (3) eine Bindersubstanz zugefügt wird, die zusammen mit einer dem Bereich zugeführten Härtersubstanz die Verfestigung des Materials (13) bewirkt

24. Verfahren nach einem der Ansprüche 21 bis 23, dadurch gekennzeichnet, daß
als zu verfestigendes Material (13) Formsand, bestehend aus Quarzsand mit einem Überzug aus Phenolharz verwendet wird.

25. Vorrichtung zur Durchführung des Verfahrens nach Anspruch 21 mit
einer höheneinstellbaren Unterlage (9), einer Vorrichtung (12) zum Aufbringen einer Schicht des verfestigbaren Materiales (13) auf die Unterlage (9), einer Bestrahlungseinrichtung (4) und einer Steuerung (8) für die Bestrahlungseinrichtung (4) zum Bestrahlen von den dem Objekt (3) entsprechenden Stellen der Schicht, gekennzeichnet durch
eine Vorrichtung zum Zuführen der verfestigenden Substanz in den Bereich.

26. Vorrichtung nach Anspruch 25, dadurch gekennzeichnet, daß
ein Arbeitstisch (1) mit einem den umschließenden Bereich (15) entsprechenden Ausschnitt (2) vorgesehen ist, und daß die Unterlage (9) in eine Position anhebbar ist, in der ihre Oberfläche innerhalb des Ausschnittes (2) im wesentlichen in einer Ebene mit der Oberfläche des Arbeitstisches (1) liegt.

27. Vorrichtung nach Anspruch 26, dadurch gekennzeichnet, daß
die Vorrichtung zum Zuführen der verfestigenden Substanz ein in sich geschlossenes Rohr zur Aufnahme der Substanz umfaßt, welches eine Mehrzahl von Düsen zur Abgabe der Substanz aufweist, wobei das Rohr in einer den Ausschnitt (2) umgebenden Ausnehmung (17) des Arbeitstisches (1) vorgesehen ist, so daß es den das Objekt (3) umschließenden Bereich des Materiales (13) einschließt

## Claims

1. Process for producing a three-dimensional object, in which the object (3) is produced layer-by-layer by respectively applying a layer of material (13) which can be made to set by means of electromagnetic radiation or particle radiation and subsequently making it set at the appropriate locations for the object (3) by irradiating it, a container wall (15) for the material (13) being produced by making a region of the material (13) enclosing the object (3) set at the same time, characterized in that the region is made to set by exposure to heat by means of thermal conduction.

2. Process according to Claim 1, characterized in that a powdered solid material is used as the material (13).

3. Process according to Claim 2, characterized in that moulding sand is used as the material (13).

4. Process according to Claim 3, characterized in that the moulding sand comprises quartz sand with a coating of phenolic resin.

5. Process according to Claim 1 or 2, characterized in that a plastic-coated metal or ceramic powder is used as the material (13).

6. Process according to one of Claims 1 to 5, characterized in that a material layer of defined thickness is introduced into a cutout (2) in a workbench (1) and in that the container wall (15) is produced by heating the material region adjacent to the inner wall of the cutout (2), so that the material layer is enclosed by the container wall (15).

7. Process according to Claim 6, characterized in that the material layer is applied to an underlying support (9) which, in its highest position, is arranged at least partially within the cutout (2) and, for forming each layer of the object (3), is lowered downwards by an amount corresponding to the thickness of this layer.

8. Process according to Claim 6 or 7, characterized in that, when making a layer of the object (3) set, in each case an annular region enclosing at least one layer lying thereunder is made to set by exposure to heat.

9. Process according to Claim 8, characterized in that, when making the layers of the object (3) set, the annular regions are made to set continuously one after the other for producing the container wall (15) enclosing the entire object (3).

10. Process according to one of Claims 6 to 9, characterized in that, before producing the container wall (15) and the object (3), a material layer is made to set over the entire area enclosed by the region of the container wall (15), so that a base (20) is produced for the container.

11. Process according to Claim 10, characterized in that the area is made to set by heating the underlying support (9).

12. Process according to Claim 10, characterized in that the area is made to set by irradiating it.

13. Process according to one of Claims 6 to 12, characterized in that, after producing the container wall (15) and the object (3), a material layer is made to set over the entire area enclosed by the region of the container wall (15), so that a cover (21) is produced for the container.

14. Process according to Claim 13, characterized in that the area is made to set by exposure to heat by means of thermal conduction.

15. Process according to Claim 13, characterized in that the area is made to set by irradiation.

16. Process according to one of Claims 6 to 15, characterized in that a heating spiral provided in the cutout (2) in the workbench (1) is used for making the container wall (15) set.

17. Device for carrying out the process according to Claim 1, having a height-adjustable underlying support (9), a device (12) for applying to the underlying support (9) a layer of the material (13) which can be made to set, an irradiating means (4) and a control system (8) for the irradiating means (4) for irradiating the appropriate locations of the layer for the object (3), characterized by a heating means (16) for making the region of the material (13) enclosing the object (3) set by exposure to heat by means of thermal conduction.

18. Apparatus according to Claim 17, characterized in that a workbench (1) with a cutout (2), corresponding to the enclosing region (15), is provided, and in that the underlying support (9) can be raised into a position in which its surface lies within the cutout (2) substantially in a plane with the surface of the workbench (1).

19. Apparatus according to Claim 18, characterized in that the heating means (16) comprises a heating spiral which is provided in a recess (17) of the workbench (1) surrounding the cutout (2), so that it encloses the region of the material enclosing the object.

20. Apparatus according to one of Claims 17 to 19, characterized in that the irradiating means (4) comprises a laser.

21. Process for producing a three-dimensional object, in which the object (3) is produced layer-by-layer by respectively applying a layer of material (13) which can be made to set by means of electromagnetic radiation or particle radiation and subsequently making it set at the appropriate locations for the object (3) by irradiating it, a container wall (15) for the material being produced by making a region of the material enclosing the object set at the same time, characterized in that the region is made to set by feeding a solidifying substance into the region.

22. Process according to Claim 21, characterized in that the substance comprises a liquid adhesive.

23. Process according to Claim 21 or 22, characterized in that, before the object (3) is made to set, there is added to the material (13) to be made to set a binder substance, which together with a hardener substance, fed to the region, makes the material (13) set.

24. Process according to one of Claims 21 to 23, characterized in that moulding sand, comprising quartz sand with a coating of phenolic resin, is used as the material (13) to be made to set.

25. Device for carrying out the process according to Claim 21, having a height-adjustable underlying support (9), a device (12) for applying to the underlying support (9) a layer of the material (13) which can be made to set, an irradiating means (4) and a control system (8) for the irradiating means (4) for irradiating the appropriate locations of the layer for the object (3), characterized by a device for feeding the solidifying substance into the region.

26. Device according to Claim 25, characterized in that a workbench (1) with a cutout (2), corresponding to the enclosing region (15), is provided, and in that the underlying support (9) can be raised into a position in which its surface lies within the cutout (2) substantially in a plane with the surface of the workbench (1).

27. Device according to Claim 26, characterized in that the device for feeding the solidifying substance comprises a self-contained tube for receiving the substance, which has a plurality of nozzles for discharging the substance, the tube being provided in a recess (17) of the workbench (1) surrounding the cutout (2), so that it encloses the region of the material (13) enclosing the object (3).

## Revendications

1. Procédé pour la fabrication d'un objet en trois dimensions, ledit objet (3) étant réalisé par couches successives, de telle sorte que respectivement une couche, faite d'une matière (13) solidifiable au moyen d'un rayonnement électro-magnétique ou d'un rayonnement particulaire, soit appliquée et ensuite solidifiée par irradiation en des points qui correspondent à l'objet (3), dans lequel, pour la réalisation d'une paroi de récipient (15) pour le matériau (13), a lieu une solidification conjointe d'une zone dudit matériau (13) entourant ledit objet (3), caractérisé en ce que la solidification de ladite zone s'effectue par l'effet de la chaleur apportée par conduction thermique.

2. Procédé selon la revendication 1, caractérisé en ce que, pour servir de matériau (13), on utilise une matière solide en forme de poudre.

3. Procédé selon la revendication 2, caractérisé en ce que, pour servir de matériau (13), on utilise du sable de fonderie.

4. Procédé selon la revendication 3, caractérisé en ce que le sable de fonderie comprend du sable de quartz enrobé de résine phénolique.

5. Procédé selon les revendications 1 ou 2, caractérisé en ce que pour servir de matériau (13) on utilise une poudre céramique ou métallique enrobée de matière plastique.

6. Procédé selon l'une des revendications 1 à 5, caractérisé en ce que dans une découpe (2) d'une table de travail (1), on intègre une couche de matière d'une épaisseur définie et que la paroi (15) du récipient est réalisée par l'échauffement de la zone de matière adjacente à la paroi intérieure de la découpe (2), de telle sorte que la couche de matière se trouve entourée par la paroi (15) du récipient.

7. Procédé selon la revendication 6, caractérisé en ce que la couche de matière est appliquée sur un support (9), lequel est disposé dans sa position la plus élevée, au moins partiellement à l'intérieur de la découpe (2), et qui, pour former chaque couche de l'objet (3), sera abaissé vers le bas dans une proportion qui correspond à l'épaisseur de cette couche.

8. Procédé selon la revendication 6 ou 7, caractérisé en ce que lors de la solidification d'une couche de l'objet (3), s'effectue la solidification, sous l'effet de la chaleur, d'au moins une zone de forme annulaire entourant une couche placée sous la première.

9. Procédé selon la revendication 8, caractérisé en ce que lors de la solidification des couches de l'objet (3), les zones de forme annulaire sont solidifiées de manière continue et successive afin de produire la paroi (15) du récipient entourant la totalité de l'objet (3).

10. Procédé selon l'une des revendications 6 à 9, caractérisé en ce qu'avant la réalisation de la paroi (15) du récipient et de l'objet (3), prend place la solidification d'une couche de matière sur la totalité de la surface entourée par la zone de la paroi (15) du récipient, de manière à produire un fond (20) pour ce récipient.

11. Procédé selon la revendication 10, caractérisé en ce que la surface est solidifiée par le chauffage du support (9).

12. Procédé selon la revendication 10, caractérisé en ce que la surface est solidifiée par irradiation.

13. Procédé selon l'une des revendications 6 à 12, caractérisé en ce que, après la réalisation de la paroi (15) du récipient et de l'objet (3), prend place la solidification d'une couche de matière qui s'étend sur toute la surface entourée par la zone de la paroi (15) du récipient, de manière à produire un couvercle (21) pour ce récipient.

14. Procédé selon la revendication 13, caractérisé en ce que la surface est solidifiée par l'effet de la chaleur transmise par conduction thermique.

15. Procédé selon la revendication 13, caractérisé en ce que la surface est solidifiée par irradiation.

16. Procédé selon l'une des revendications 6 à 15, caractérisé en ce que pour la solidification de la paroi (15) du récipient, on utilise une spirale chauffante prévue à l'intérieur de la découpe (2) de la table de travail (1).

17. Dispositif pour la mise en oeuvre du procédé selon la revendication 1, comportant un support (9) réglable en hauteur, un dispositif (12) pour l'application d'une couche de la matière à solidifier (13) sur le support (9), un dispositif d'irradiation (4) et une commande (8) pour le dispositif d'irradiation (4), afin d'irradier des points de la couche qui correspondent à l'objet (3), caractérisé par la présence d'un dispositif de chauffe (16) pour la solidification de la zone de matériau (13) entourant l'objet (3) par effet de la chaleur transmise par conduction thermique.

18. Dispositif selon la revendication 17, caractérise par la présence d'une table de travail (1) comportant une découpe (2) qui correspond à la zone entourante (15), et en ce que le support (9) peut être soulevé dans une position dans laquelle sa surface se situe à l'intérieur de ladite découpe (2), sensiblement dans le même plan que la surface de la table de travail (1).

19. Dispositif selon la revendication 18, caractérisé en ce que le dispositif de chauffe (16) comprend une spirale chauffante qui est prévue dans un évidement (17) entourant la découpe (2) de la table de travail (1), de telle manière qu'elle entoure la zone du matériau qui entoure l'objet.

20. Dispositif selon l'une des revendications 17 à 19, caractérisé en ce que le dispositif d'irradiation (4) comprend un laser.

21. Procédé pour la fabrication d'un objet en trois dimensions, selon lequel l'objet (3) est réalisé couche par couche, de telle sorte que respectivement on applique une couche d'un matériau (13) pouvant être solidifié au moyen d'un rayonnement électromagnétique ou d'un rayonnement particulaire, et ensuite on solidifie par irradiation des points qui correspondent à l'objet (3), tandis que pour réaliser une paroi de récipient (15) pour le matériau, on procède conjointement à la solidification d'une zone de matière entourant l'objet, caractérisé en ce que la solidification de ladite zone s'effectue par apport d'une substance solidifiante dans cette zone.

22. Procédé selon la revendication 21, caractérisé en ce que la substance comprend une colle liquide.

23. Procédé selon la revendication 21 ou 22, caractérisé en ce que l'on ajoute au matériau (13) à solidifier, avant la solidification de l'objet (3), une substance liante qui, conjointement avec une substance durcissante apportée à la zone, a pour effet de solidifier le matériau (13).

24. Procédé selon l'une des revendications 21 à 23, caractérisé en ce que l'on utilise comme matériau à solidifier (13) du sable de fonderie constitué de sable de quartz enrobé de résine phénolique.

25. Dispositif pour la mise en oeuvre du procédé conforme à la revendication 21, comportant un support (9) réglable en hauteur, un dispositif (12) pour l'application d'une couche du matériau pouvant être solidifié (13) sur le support (9), un dispositif d'irradiation (4) et une commande (8) pour le dispositif d'irradiation (4) destiné à irradier des points de la couche qui correspondent à l'objet (3), caractérisé par la présence d'un dispositif d'amenée de la substance solidifiante dans la zone.

26. Dispositif selon la revendication 25, caractérisé par la présence d'une table de travail (1) comportant une découpe (2) qui correspond à la zone entourante (15), et en ce que le support (9) peut être soulevé dans une position dans laquelle sa surface se situe à l'intérieur de la découpe (2), sensiblement dans le même plan que la surface de la table de travail (1).

27. Dispositif selon la revendication (26), caractérisé en ce que le dispositif pour l'amenée de la substance solidifiante comprend, pour recevoir la substance, un tuyau refermé sur lui-même qui présente une pluralité de buses pour l'émission de la substance, ledit tuyau étant prévu dans un évidement (17) de la table de travail (1) qui entoure la découpe (2), de telle sorte que ce tube entoure la zone du matériau (13) entourant l'objet (3).
